(19) Europäisches Patentamt
European Patent Office
Office européen des brevets

(11) EP 1 983 515 A1

(12) EUROPEAN PATENT APPLICATION
published in accordance with Art. 158(3) EPC

(43) Date of publication:
22.10.2008 Bulletin 2008/43

(21) Application number: 07708277.4

(22) Date of filing: 02.02.2007

(51) Int Cl.:
G11B 7/24 (2006.01) G11B 7/244 (2006.01)

(86) International application number:
PCT/JP2007/052294

(87) International publication number:
WO 2007/089041 (09.08.2007 Gazette 2007/32)

(84) Designated Contracting States:
AT BE BG CH CY CZ DE DK EE ES FI FR GB GR HU IE IS IT LI LT LU LV MC NL PL PT RO SE SI SK TR

(30) Priority: 02.02.2006 JP 2006055493

(71) Applicant: TAIYO YUDEN CO., LTD.
Tokyo 110-0005 (JP)

(72) Inventors:
- MATSUDA, Isao
Tokyo 110-0005 (JP)
- HARA, Fumi
Tokyo 110-0005 (JP)

(74) Representative: Vossius & Partner
Siebertstrasse 4
81675 München (DE)

# (54) OPTICAL INFORMATION RECORDING MEDIUM, MANUFACTURING METHOD THEREOF, AND RECORDING METHOD

(57) An object of the present invention is to provide an optical information recording medium suited for high-density and high-speed recording using a recording wavelength of 360 to 450 nm, in particular, around 400 nm (for example, 405 nm) and its recording method.

The present invention is based not on a conventional High to Low method but on a Low to High method and, when the reflectance of the pit is higher than that of the non-pit area, the maximum film thickness of the recording layer at the track area where the pits are arranged is in the range from 25 to 60 nm and the maximum film thickness of the recording layer at the area adjacent to the track area is in the range of 5 to 30 nm, a satisfactory push-pull signal can be obtained. Further, the film thickness of the reflecting layer is preferably set in the range from 120 to 180 nm, and groove width of the reflection layer is preferably set in the range from 85 to 150 nm.

Fig. 3

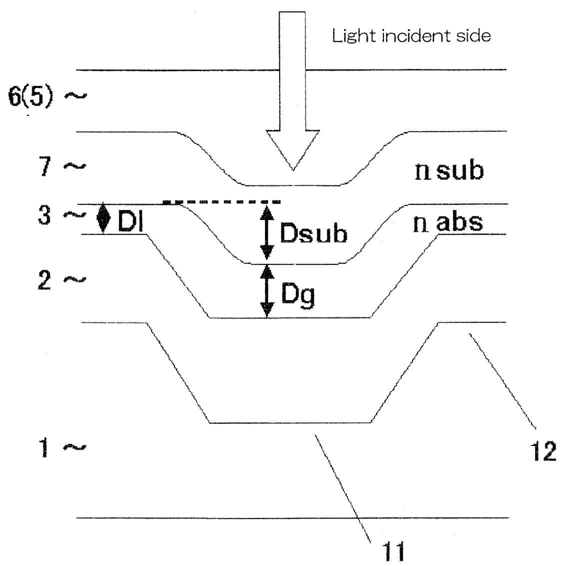


EP 1 983 515 A1

## Description

## Technical Field

The present invention relates to a write-once type optical information recording medium and the recording method thereof. In particular, this invention relates to an optical information recording medium capable of recording information by means of a semiconductor laser using a laser beam having a wavelengths of 360 to 450 nm (blue laser beam), the manufacturing method thereof, and the recording method thereof.

## Background Art

Nowadays, many efforts have been conducted trying to develop an optical information recording medium of write-once type which is designed to use a blue laser beam having a wavelength in the vicinity of 360 to 450 nm (for example, around 405 nm) which is shorter in wavelength than that conventionally employed (see Patent Document 1). In this optical information recording medium, an organic dye compound is employed for forming an optical recording layer. As the organic dye compound absorbs laser beam, the organic dye compound is decomposed or denatured, thereby bringing about a change in optical properties of the laser beam of recording/palyback wavelength. This change is then picked up as a modulation factor, thereby making it possible to perform the recording as well as the palyback.
In conformity with recent trend to increase the density and the speed of recording, a laser beam of short wavelength region is now increasingly employed in the recording. As the laser beam to be employed is getting shorter in wavelength, the optical recording layer is required to be formed increasingly thinner. Therefore, the development of the optical information recording medium is now being advanced especially attaching importance to the selection of dyes having a higher refractive index, i.e., development of so-called "High to Low" type optical information recording medium is being undertaken (See Patent Document 2).
Namely, it has been practiced to secure the modulation factor by taking advantage of the optical phase difference that can be generated due to a change in refractive index at the recording /palyback wavelength.
The recording principle of the "High to Low" type optical information recording medium will be described below with reference to FIG. 15. FIG. 15 is a graph showing a relationship between the wavelength of a laser beam and refractive index n and relationship between the wavelength of a laser beam and extinction coefficient k. The refractive index n decreases after recording, resulting in the decrease of reflectance R. Therefore, there has been conventionally tried to increase the magnitude of change Δn in the refractive index n to thereby secure a sufficient magnitude of the change ΔR in the reflectance, thus securing a modulation factor between the recording pit and other portions and making it possible to perform palybackable recording.
Further, the graph describing the extinction coefficient k is substantially the same as the graph describing the absorbency to the laser beam of the dye, so that it is generally practiced to make the wavelength on the long wavelength side of this absorption peak (recording wavelength) the same as the wavelength of recording beam (laser beam). Namely, since the graph of the refractive index n indicates the absorption peak on the long wavelength side of the graph of the extinction coefficient k, it is possible to secure a large magnitude of change Δn in the refractive index n at this recording wavelength.
On the other hand, it is well know that, as with the refractive index n, the extinction coefficient k is caused to decrease after recording at the same recording wavelength. As the extinction coefficient k is decreased, the reflectance R is caused to increase. Namely, the change Δk of the extinction coefficient k acts to decrease the magnitude of change ΔR in the reflectance R due to the change Δn in refractive index n. Namely, the absolute value of ΔR can be obtained as a magnitude corresponding to (Δn-Δk). Therefore, in the conventional art, the interest of development of an optical information recording medium is focused to select a dye exhibiting as large magnitude of Δn as possible and as small magnitude of Δk as possible in order to secure a desired level of modulation factor.
Actuall, however, no one has succeeded as yet in obtaining a suitable dye which is useful as a coloring material of an optical recording layer 3 with respect to a laser beam having a recording wavelength within the range of 360 to 450 nm (for example, around 405 nm).
As described above, the coloring material is required to exhibit a suitable extinction coefficient k (absorption coefficient) and a large refractive index n so as to secure a sufficient contrast before and after the recording. Therefore, the coloring material has been selected such that the recording/palyback wavelength can be located at the skirts of the long wavelength side of the absorption peak of absorption spectrum of dye, thus designing the optical recording layer so as to secure a large magnitude of change Δn in refractive index n.
Further, as for the properties demanded of the organic compound, the behavior of decomposition thereof is required to be suitably selected in addition to the aforementioned optical properties to the blue laser beam wavelength. However, the materials having an optical property indicating a refractive index n which is comparable to that of the conventional CD-R or DVD-R in this short wavelength region is extremely limited in kinds. Namely, in order to bring the

absorption band of an organic compound close to the wavelength of blue laser beam, the molecular skeleton of the organic compound is required to be minimized or the conjugated system of the organic compound is required to be shortened. However, when the structure of the organic compound is adjusted in this manner, it may invite the problems of the decrease of the extinction coefficient k and the decrease of the refractive index n.

As for the method of overcoming these problems, there have been recently reported possibilities of improving the optical properties through the utilization of interaction between molecules such as molecular association instead of utilizing the optical properties of the simple substance of dye molecule. However, no one has succeeded as yet in realizing satisfactory recording properties by making use of such a method.

Meanwhile, in the case of performing a high-speed recording of an optical information recording medium, it is required to perform recording in a shorter period of time than that required in the conventional speed of recording or low speed recording. Therefore, the recording power is required to be increased, which increases a quantity of heat or a quantity of heat per unit time at the optical recording layer on the occasion of the recording. As a result, the problem of thermal strain tends to become more prominent, thus giving rise to generation of non-uniformity of recording pits. Further, since there is a limit in increasing the output power of semiconductor laser for emitting a laser beam, it is now demanded to develop a coloring material having such a high sensitivity that adapts to with a high-speed recording.

As described above, since an organic dye compound is employed in the optical recording layer of the optical information recording mediums, the development of optical information recording medium is mainly directed to a dye which is capable of exhibiting high refractive index to a laser beam of short wavelength side.

Since there are known at present a large number of organic dye compounds having an absorption band which is close to the blue laser wavelength, the extinction coefficient k thereof can be controlled. However, since these organic dye compounds fail to have a large refractive index n, the dye compound layer is required to have a certain degree of film thickness in order to obtain modulation factor securing a sufficient optical phase difference of the recording portion (recording pit).

However, since the recording medium where blue laser beam is employed is demanded to execute a high-density recording, the physical track pitch is required to be formed narrow. As a result, the heat generated upon decomposition of dye compound is easily transmitted to the neighboring tracks and hence raises the problem that the properties of the recording medium may be deteriorated.

Therefore, with a recording medium of a blue laser wavelength region in which it is difficult for a dye to exhibit high refractive index, it is difficult to obtain satisfactory recording characteristics in recording operation using a conventional phase change of a refractive index n.

Further, recently, development of an optical information recording medium of Low to High type has been undertaken. However, in the case where an optical information recording medium in which, in particular, grooves are concave relative to the incident direction of a laser beam in the blue laser wavelength region and a 0.1 mm thickness light-transmitting layer is provided on the incident surface of the laser beam is applied to the Low to High type optical information recording medium, when a dye of a type in which a reflectance change occurs mainly due to a change of the imaginary part k of the complex refractive index before and after the recording is used, a push-pull (NPPb) signal at the time of unrecording becomes excessively high.

When the push-pull (NPPb) signal becomes excessively high, it becomes difficult for a photodetector to distinguish between light and dark in a focus control system according to an astigmatism method, making it impossible to perform focusing follow-up. Similarly, also in a DPP (differential push-pull) system, it becomes difficult for a photodetector to distinguish between light and dark, with the result that tracking follow-up cannot be carried out. Further, an organic dye having a comparatively large extinction coefficient needs to be used, so that a push-pull value tends to become large depending on the depth or width of the groove. Further, in this case, a satisfactory push-pull value can be obtained since the refractive index is relatively small. However, since a dye with a large extinction coefficient is used, reflection easily occurs. As a result, it has been impossible to obtain a disk having a moderate and satisfactory push-pull value only by selection of materials.

[Patent Document 1] JP 11-120594-A
[Patent Document 2] JP 2003-30442-A

## Disclosure of the Invention

### Problems to be Solved by the Invention

The present invention has been made in view of the above problems, and an object thereof is to provide an optical information recording medium suited for high-density and high-speed recording using a recording wavelength of 360 to 450 nm, in particular, around 400 nm (for example, 405 nm) and the recording method thereof.

Another object of the present invention is to provide an optical information recording medium capable of performing the

recording by making use of a blue laser beam and capable of obtaining a satisfactory push-pull signal and the recording method thereof.
Still another object of the present invention is to provide an optical information recording medium capable of performing the recording by making use of a blue laser beam and capable of obtaining a satisfactory modulation factor and the recording method thereof.
Yet another object of the present invention is to provide an optical information recording medium capable of performing the recording by making use of a blue laser beam, having less thermal interference (thermal deformation), and excellent in playback tolerance and the recording method thereof.

**Means for Solving the Problems**

The present invention focuses on reducing the film thickness of the land portion as compared to a conventional design and narrowing the width (and depth) of the track.
That is, the present invention is based not on a conventional High to Low method but on a Low to High method and, when the reflectance of the pit is higher than that of the non-pit area, the maximum film thickness of the recording layer at the track area where the pits are arranged is in the range from 25 to 60 nm, and the maximum film thickness of the recording layer at the area adjacent to the track area is in the range of 5 to 30 nm, a satisfactory push-pull signal can be obtained.
That is, when the film thickness of the land portion or film thickness of the groove portion is set to an optimal value, it is possible to reduce the value of a push-pull signal while maintaining an optimum balance between the light absorption amount and light reflection amount even when a material having a large extinction coefficient is used as a recording layer. Further, by setting the groove depth or groove width of the track to an optimum value, the value of the push-pull signal can be reduced. For example, when the groove depth is reduced to increase the reflectance, thereby increasing the denominator of "push-pull (NPPb) signal = (PPb) signal/reflectance" and, accordingly, the NPPb can be reduced.
In the case where a tetrameric photo detector (A, B, C, D) is used to detect a laser light reflected by the groove, the push-pull (NPPb) is defined by:

$$\text{push-pull (NPPb) signal} = ((A+B) - (C+D)) / ((A+B) + (C+D)).$$

When the groove is subjected to Wobbling, the track pitch is changed within the range from 290 nm to 350 nm. In this case, when the groove width is reduced to a value less than the half width 160 nm of the average track pitch 320 nm, it is possible to reduce the value of the push-pull signal.
Further, the present invention focuses on the relationship between the optical phase difference between the land and groove and extinction coefficient k of the recording layer in, particularly, a Low to High type optical information recording medium having a 0.1 mm-thick light-transmitting layer on the laser beam incident surface thereof. When the relationship between the optical phase difference ΔS defined by: 2nabs {Dg - Dl + (nsub × Dsub) / nabs}/λ and change amount Δk of the extinction coefficient k before and after the recording satisfies $0.02 \leq \Delta S \times \Delta k \leq 0.11$, a satisfactory modulation factor can be secured.
Further, in the present invention, when the film thickness of the reflecting layer is set in the range from 120 to 180 nm and groove width thereof is set in the range from 85 to 150 nm in a Low to High type optical information medium, it is possible to promptly radiate the excessive heat which is caused upon recording due to an increased thickness of the reflecting layer to thereby suppress the thermal interference while maintaining a satisfactory NPPb characteristic.
Thus, it is possible to perform recording based not on the dye having a high refractive index in a conventional High to Low method but on a change in the extinction coefficient k in Low to High method. That is, it is possible to increase reliability of high-density and high-speed recording using a recording wavelength of 360 to 450 nm, in particular, around 400 nm (for example, 405 nm).
That is, a first aspect of the invention is an optical information recording medium comprising: a substrate on which a groove and land are formed; and a reflecting layer and recording layer formed on the substrate, wherein an optically-readable pit has been recorded in the recording layer or can be recorded through an irradiation of the laser beam onto the recording layer,
characterized in that the reflectance of the pit is higher than that of a non-pit area, the maximum film thickness of the recording layer at the track area where the pits are arranged is in the range from 25 to 60 nm, and the maximum film thickness of the recording layer at the area adjacent to the track area is in the range of 5 to 30 nm.
A second aspect of the invention is an optical information recording medium comprising: a substrate on which a groove and land are formed; and a reflecting layer and recording layer formed on the substrate, wherein an optically-readable pit has been recorded in the recording layer or can be recorded through an irradiation of the laser beam onto the recording layer, characterized in that the recording layer contains an organic dye, and the reflectance of the groove portion is lower than that of the land portion.

A third aspect of the invention is an optical information recording medium comprising: a substrate on which a groove and land are formed; and a reflecting layer and recording layer formed on the substrate, wherein an optically-readable pit has been recorded in the recording layer or can be recorded through an irradiation of the laser beam onto the recording layer, characterized in that 1-Dsub/Dref is in the range from 0.2 to 0.6, where Dsub is the maximum depth of the recording layer at the groove portion, and Dref is the maximum depth of the reflecting layer at the groove portion, and the reflectance of the groove portion is lower than that of the land portion.

A fourth aspect of the invention is an optical information recording medium comprising: a substrate on which a groove and land are formed; a reflecting layer and recording layer formed on the substrate; and a light-transmitting layer formed on the recording layer, wherein an optically-readable pit has been recorded in the recording layer or can be recorded through an irradiation of the laser beam from the light-transmitting layer side, characterized in that when $\Delta S = 2nabs \{Dg - Dl + (nsub \times Dsub) / nabs\} / \lambda$ (where Dsub is the maximum depth of the groove portion in a layer on the light transmitting side relative to the recording layer; Dg is the maximum thickness of the recording layer at the groove portion; Dl is the maximum thickness of the recording layer at the land portion; nsub is the real part of the complex refractive index of a layer located on the light-transmitting layer side relative to the recording layer; nabs is the real part of the complex refractive index of the recording layer; and $\lambda$ is the wavelength of a reproduction light) and change amount $\Delta k$ = Kabsb-kabsa (kabsb is the imaginary part of the complex refractive index of the recording layer before recording; and kabsa is the imaginary part of the complex refractive index of the recording layer after recording) are satisfied, $0.02 \leq \Delta S \times \Delta k \leq 0.11$ is satisfied.

A fifth aspect of the invention is an optical information recording medium comprising: a substrate on which a groove and land are formed; and a reflecting layer and recording layer formed on the substrate, wherein an optically-readable pit has been recorded in the recording layer or can be recorded through an irradiation of the laser beam from the light transmitting layer side,
characterized in that the film thickness) of the reflecting layer is set in the range from 120 to 180 nm, and the groove width of the reflecting layer is set in the range from 85 to 150 nm.

A sixth aspect of the invention is a manufacturing method of an optical information recording medium onto which an optically-readable pit is recorded through an irradiation of a laser beam having a wavelength of 360 to 450 nm, characterized by comprising the steps of: forming a reflecting layer on a substrate; forming, on the reflecting layer, a recording layer such that the maximum film thickness thereof at the track area where the pits are arranged is in the range from 25 to 60 nm, and maximum film thickness thereof at the area adjacent to the track area is in the range of 5 to 30 nm; and forming, on the recording layer, a light-transmitting layer having a thickness of about 0.1 mm.

A seventh aspect of the invention is a recording method of an optical information recording medium onto which an optically-readable pit is recorded through an irradiation of a laser beam having a wavelength of 360 to 450 nm, characterized in that an optical information recording medium having a recording layer whose maximum film thickness at the track area where the pits are arranged is in the range from 25 to 60 nm and maximum film thickness at the area adjacent to the track area is in the range of 5 to 30 nm is irradiated with a laser beam having a spot diameter in the radial direction of 0.3 to 0.5 $\mu$m and a recording power of 4.9 to 5.9 mW to form the pit such that the reflectance of the pit is higher than that of non-pit area.

### Advantages of the Invention

Recording to the present invention, it is possible to facilitate achievement of high-density and high-speed recording of information onto an optical information recording medium, thereby realizing a Low to High type optical information recording medium using a shorter wavelength of a laser beam, e.g., a recording wavelength of 360 to 450 nm. Further, in the present invention, it is possible to obtain a satisfactory push-pull signal and a satisfactory modulation factor in an optical information medium using a shorter wavelength of a laser beam, e.g., a recording wavelength of 360 to 450 nm.
Further, in the present invention, it is possible to suppress thermal interference (Jitter) while maintaining a satisfactory NPPb characteristic.

### Brief Description of the Drawings

FIG. 1 is a cross-sectional view of an optical information recording medium according to an embodiment of the present invention;

FIG. 2 is a cross-sectional view of an optical information medium according to another embodiment of the present invention;

FIG. 3 is an enlarged view of the main portion of the optical information recording medium according to the embodiment of the present invention;

FIG. 4 is a graph showing a relationship between a recording layer film thickness and push-pull signal in the present invention;

FIG. 5 is a graph showing a relationship between a track groove depth and push-pull signal in the present invention;

FIG. 6 is a graph showing a relationship between a track groove width and push-pull signal in the present invention;

FIG. 7 is a graph showing a relationship between recording layer leveling and push-pull signal in the present invention;

FIG. 8 is a graph showing a relationship between an optical parameter and push-pull signal in the present invention;

FIG. 9 is a graph showing a relationship between an optical parameter and modulation factor in the present invention;

FIG. 10 is a graph showing a relationship between a reflection film thickness and Jitter characteristic in the present invention;

FIG. 11 is a graph showing a relationship between a groove width and push-pull signal in the present invention;

FIG. 12 is a graph showing the influence of $\Delta n$ and $\Delta k$ on the modulation factor (reflectance) in the optical information recording medium according to the present invention, wherein the film thickness of the optical information recording medium is variously changed;

FIG. 13 is a graph showing a change of the reflectance relative to refractive index n;

FIG. 14 is a graph showing a change of the reflectance relative to extinction coefficient k; and

FIG. 15 is a graph showing a relationship between the wavelength of a laser beam and refractive index n and relationship between the wavelength of a laser beam and extinction coefficient k.

**Explanation of Reference Symbols**

| | |
|---|---|
| 1: | Substrate |
| 2: | Reflecting layer |
| 3: | Recording layer |
| 4: | Concave portion |
| 5, 6: | Light-transmitting layer |
| 7: | Intermediate layer |
| 10: | Optical information recording medium |
| 11: | Groove |
| 12: | Land |

**Best Mode for Carrying Out the Invention**

An optical information recording medium according to an embodiment of the present invention will be described below with reference to FIGS. 1 to 3. FIG. 1 is a cross-sectional view of an optical information recording medium using a blue laser beam. In FIG. 1, a disk-shaped optical information recording medium 10 has a substrate 1 having a thickness of 1.1 mm, a reflecting layer 2 formed on the substrate 1, a recording layer 3 (light-absorptive layer) formed on the reflecting layer 2, an intermediate layer 7 formed on the recording layer 3, and a light-transmitting layer 6 having a thickness of 0.1 mm formed on the intermediate layer 7.

The substrate 1 is formed mainly using a resin having a high transparency exhibiting a refractive index ranging from about 1.5 to 1.7 to a laser beam and being excellent in impact resistance. For example, the substrate 1 can be formed using a polycarbonate plate, a glass plate, an acrylic plate, an epoxy plate, etc.

The reflecting layer 2 is formed of a metal film which is high in heat conductivity and light reflectance, and can be formed by the deposition of gold, silver, copper, aluminum, or an alloy comprising any of these metals by means of vapor deposition method, sputtering method, etc.

The optical recording layer 3 deposited on the reflecting layer 2 is formed of a layer made of a coloring material. This optical recording layer 3 is caused to bring about the thermal decomposition, the heat generation, the absorption of heat, melting, sublimation, deformation, or denaturing as it is irradiated with a laser beam. This recording layer 3 can be formed, for example, by uniformly coating an azo dye, a cyanine dye, a mixture thereof, or the like which has been dissolved in a solvent, on the surface of the reflecting layer 2 by means of spin-coating method, etc. The recording layer 3 may be formed by using the azo dye compound as shown in the following chemical formula 1.

[Chemical formula 1]

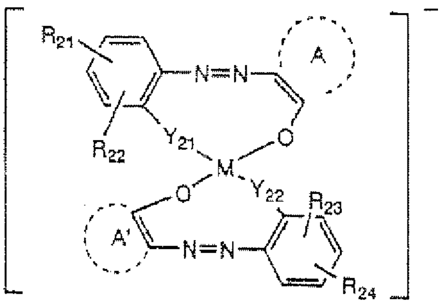

where A and A', which may be same or different, each represents a heterocyclic ring containing one or more heteroatoms selected from the group consisting of an nitrogen atom, an oxygen atom, a sulfur atom, a selenium atom, and a tellurium atom; $R_{21}$ to $R_{24}$ each independently represents a hydrogen atom or a substituent; and $Y_{21}$ and $Y_{22}$ , which may be the same or different, each represents heteroatom selected from elements of the group 16 of the periodic table.

Further, the recording layer 3 may be formed by using the cyanine dye compound as shown in the following chemical formula 2.

[Chemical formula 2] $\Phi^{\oplus}\text{-}L=\phi\ (X^{\ominus})_m$

where $\Phi^{+}$ and $\phi$ each independently represents an indolenine ring residue, a benzoindolenine ring residue, or dibenzoindolenine ring residue; L represents a linking group for forming a mono- or dicarbocyanine dye; $X^{-}$ represents an anion; and m represents an integer of 0 or 1.

With respect to the materials to be employed for forming the recording layer 3, although it is possible to employ any kind of recording materials, it is more preferable to employ a photoabsorptive organic dye.

The intermediate layer 7 has a function of protecting the recording layer 3 and is formed on the surface of the recording layer 3 by means of vapor deposition method, sputtering method, etc., so as to prevent the recording materials of the recording layer 3 from mixing with the adjacent layer.

Examples of materials for forming the intermediate layer 7 include, ZnS, $SiO_2$, SiN, AlN, ZnS-$SiO_2$, and SiC.

The light-transmitting layer 6 functions as a protecting layer for protecting the reflecting layer 2 and recording layer 3 from an external impact and for preventing these layers 2 and 3 from getting into contact with an corrosive factor such as moisture or the like. The light-transmitting layer 6 is formed from a material through which a laser beam can be transmitted. For example, the light-transmitting layer 6 is formed by bonding to the intermediate layer 7, with a transparent adhesive such as ultraviolet-curable resin or pressure-sensitive adhesive, a transparent material such as a sheet made of, e.g., a polycarbonate resin, an acrylic resin, or polyolefinic resin, or a glass plate.

In the optical information recording medium shown in FIG. 1, the intermediate layer is interposed between the recording layer 3 and light-transmitting layer 6. Alternatively, however, the light-transmitting layer 6 may directly be formed on the recording layer 3, as shown in FIG. 2. For example, the light-transmitting layer 5 may be formed by applying an ultraviolet-curable resin to the recording layer 3 by spin-coating and irradiating the resin with ultraviolet rays. Further, a method may be employed in which the light-transmitting layer 5 is formed by applying an adhesive to the surface of a transparent materials such as a sheet made of,

e.g., a polycarbonate resin, an acrylic resin, or polyolefinic resin, or a glass plate and the resultant light-transmitting layer 5 is bonded to the recording layer 3.

In the optical information recording medium constructed as described above, a laser beam is irradiated onto the recording layer 3 through the light-transmitting layer 6, and the irradiated recording layer 3 absorbs the laser beam, causing the light energy of this beam to be converted into a thermal energy. The heat energy then causes the recording layer 3 to be decomposed or denatured, thus creating a recording pit. By making use of this recording pit,

the contrast that can be created due to the reflectance of light at the recorded portion or unrecorded portion is read out as an electric signal (modulation factor).

A configuration of the present invention will be described below.

FIG. 3 is an enlarged view of the main portion of the optical information recording medium shown in FIG. 1.

As shown in FIG. 3, the maximum depth of the groove 11 in a layer on the light transmitting side relative to the recording layer 3, that is, the depth from a layer boundary (boundary between the recording layer 3 and its adjacent layer on the light-transmitting side, i.e., intermediate layer 7 ) at the portion corresponding to a land 12 to the deepest bottom portion of the same layer boundary at the portion corresponding to a groove 11 is designated as Dsub. The real part of the complex refractive index of a layer located on the light-transmitting layer 6 side relative to the recording layer 3 is designated as nsub. When the layer located on the light-transmitting layer 6 side relative to the recording layer 3 includes a plurality of layers including the light-transmitting layer 6, nsub is set as the real part of the composite complex refractive

index of the layers by measuring the surfaces of the layers including the light-transmitting layer 6. The real part of the complex refractive index of the recording layer 3 is designated as nabs. The maximum thickness of the recording layer 3 at the portion, corresponding to the groove 11 is designated as Dg. The maximum thickness of the recording layer 3 at the portion corresponding to the land 6 is designated as Dl.

In this configuration, when a laser beam is irradiated from the light-transmitting layer 6 side, the optical distance to the layer boundary between the recording layer 3 and its adjacent layer on the light-transmitting side at the portion corresponding to the land 12 is represented by: nabs·Dl, and the optical distance to the same layer boundary at the portion corresponding to the groove 11 is represented by: nsub·Dsub + nabs·Dg. Accordingly, the difference ND of the optical distances is represented as follows:

$$ND = nabs \cdot Dg + nsub \cdot Dsub - nabs \cdot Dl$$

When a palyback laser beam is irradiated from the light-transmitting 6 side, the optical phase difference ΔS of the palyback laser beam reflected by the reflecting layer 2 between the groove 11 portion and the land 12 portion is represented by:

$$\begin{aligned} \Delta S &= 2ND/\lambda \\ &= 2\ (nabs \cdot Dg + nsub \cdot Dsub - nabs \cdot Dl)/\ \lambda \\ &= 2nabs\ \{Dg - Dl + (nsub \times Dsub)/\ nabs\}/\ \lambda \end{aligned}$$

In the case where the light-transmitting layer 5 is directly formed on the recording layer 3 as shown in the cross-sectional view of FIG. 2, Dsub and nsub may be measured with the layer boundary between the recording layer 3 and light-transmitting layer 5 set as a reference.

The present invention focuses on a recording method according to Low to High method in order to realize an optical information recording medium capable of performing the recording by making use of a blue laser beam. Specifically, the present invention focuses on an approach in which the film thickness of a recording layer at the portion corresponding to the land portion is reduced as compared to that in a conventional design and, further, width (and depth) of the track formed on a recording layer is reduced.

That is, a fact that a satisfactory recording/ palyback characteristic can be obtained by setting a push-pull (NPPb) signal in the range from 0.4 to 0.7 in the wavelength range from 360 to 450 nm while maintaining the modulation factor a constant was experimentally confirmed.

A relationship between the film thicknesses of the recording layer at the track area (corresponding to the groove 11 portion) and area adjacent to the track (corresponding to the land 12 portion) and push-pull (NPPb) signal is shown in FIG. 4.

In the graph shown in FIG. 4, the horizontal axis denotes the land film thickness/groove film thickness of the recording layer 3 and vertical axis denotes the value of the push-pull (NPPb) signal.

As can be seen from FIG. 4, in order to obtain a satisfactory push-pull (NPPb) signal, the land film thickness/groove film thickness of the recording layer 3 needs to fall within the range from 0.1 to 0.6. When the land film thickness/groove film thickness exceeds 0.6, the value of the push-pull (NPPb) signal exceeds 0.7 to become too large, making it impossible for a laser pickup to achieve focusing follow-up. Conversely, when the land film thickness/groove film thickness falls below 0.1, the value of the push-pull (NPPb) signal becomes less than 0.4, making it impossible to achieve tracking control after the recording.

When data of the land film thickness and groove film thickness of the recording layer 3 are sampled in the relationship shown in FIG. 4, there was obtained the result that the maximum film thickness Dg of the recording layer at the track area is preferably 25 to 60 nm, and the maximum film thickness Dl of the recording layer at the area adjacent to the track is preferably 5 to 30 nm. This value range can be set in accordance with the range (from 0.1 to 0.6) of the ratio of the land film thickness relative to the groove film thickness shown in FIG. 4.

The recording layer film thickness can be measured by peeling the recording layer 3 and layers formed above the recording layer 3 apart at the boundary between the intermediate layer 7 and recording layer 3. As a measuring apparatus, an atomic force microscope (AFM) can be used. For example, the land film thickness Dl can be measured at the inner or outer peripheral area of the recording layer 3 where no groove is formed. In the case where the groove film thickness

Dg is to be obtained, the recording layer depth Dsub and land film thickness Dl are previously measured, the reflecting layer depth Dref is measured after cleaning of the recording layer, and Dl + Dref - Dsub is calculated.
The above measurement method is merely exemplary, and any other suitable methods are applicable.
In this case, a measurement error of ±5% is preferably estimated in consideration of variations due to film peeling. Further, each measurement value may be the maximum value at its measurement point.

A relationship between the track groove depth and push-pull (NPPb) signal and relationship between the track groove width and push-pull (NPPb) signal are shown in FIGS. 5 and 6, respectively.
In the graph shown in FIG. 5, the horizontal axis denotes the groove depth corresponding to the track groove depth and vertical axis denotes the value of the push-pull NPPb) signal. In the graph shown in FIG. 6, the horizontal axis denotes the groove width corresponding to the track groove width and vertical axis denotes the value of the push-pull (NPPb) signal. As can be seen from FIG. 5, in order to obtain a satisfactory push-pull (PNNb) signal, the groove depth may be at least in the range from 30 to 70 nm. However, in order to obtain a high-density optical information, recording medium using a recording wavelength of 360 to 450 nm, the track pitch needs to be in the range from 290 to 350 nm. Therefore, the groove depth is preferable in the range from 35 to 65 nm in order to suppress a variation in the shape between the inner and outer peripherals of the substrate 1. Further, in order to secure a satisfactory push-pull (NPPb) signal as well as to suppress a variation in the shape of the substrate 1, the groove width is preferably 85 to 150 nm.

The track groove depth and track groove width mentioned here are values measured in a state where the reflecting layer 2 has been formed on the substrate 1. This is different from the substrate groove depth and substrate groove width defined in a conventional optical information recording medium. More specifically, in the present invention, a laser beam is irradiated not from the substrate side but from the direction opposite to the substrate side, i.e., the light-transmitting layer side, so that it is necessary to measure the groove depth and groove width of the track after the formation of the reflecting layer 2 on the substrate 1 in order to obtain a stable push-pull (NPPb) signal.
The measurement value of the groove depth may be the maximum value at its measurement point, and the measurement value of the groove width may be half width. The measurement may be made by means of the atomic force microscope (AFM) as in the case of the measurement of the recording layer film thickness, with a probable measurement error of ±5%.

Further, in the Low to High type optical information recording medium according to the present invention, the reflectance of the pit portion formed by laser beam irradiation is higher than that of the non-pit portion. More specifically, when a laser beam is irradiated on the groove portion in FIG. 3, the recording layer 3 absorbs the laser beam and is then decomposed or denatured, thus creating a recording pit. At this time, the absorption peak of the absorption spectrum of the recording layer 3 is shifted to the short wavelength side. When the recording/palyback wavelength is set on the short wavelength side relative to the absorption peak of the recording layer, the value of the extinction coefficient k of the recording layer 3 can be increased to allow the reflectance of the pit portion after recording to be higher than that of the non-pit portion, with the result that presence/absence of the pit can be determined.
The reflectance can be measured by using a measuring apparatus such as a spectrum analyzer, and a difference in the reflectance between the pit position and non-pit portion can be obtained as the magnitude of electrical signal.

Further, when an organic dye is used to form the recording layer in the low to High type optical information recording medium according to the present invention, the reflectance of the groove portion is lower than that of the land portion. This can be achieved by appropriately setting the optical phase difference ΔS between the land and groove in FIG. 3. By reducing the reflectance of the groove portion to a lower level, a pit to be formed in the groove portion can be recorded more clearly. As a result, it is possible to obtain an optimum push-pull (NPPb) signal as well as to obtain a satisfactory modulation factor to allow accurate reading of the pit after the recording.
The measurement of the reflectance in this case can be made according to the method described above.

A relationship between the leveling of the recording layer 3 and push-pull (NPPb) signal is shown in FIG. 7. In the graph shown in FIG. 7, the horizontal axis denotes the value of the leveling, and vertical axis denotes the value of the push-pull (NPPb; signal. The leveling is an index indicating the influence of the laser beam diffraction. The value of the leveling can be obtained according to the condition of: 1-Dsub/Dref (where Dsub is the maximum depth of the recording layer at the groove portion, and Dref is the maximum depth of the reflecting layer at the groove portion). As can be seen from FIG. 7, in order to obtain a satisfactory push-pull (NPPb) signal, the value obtained according to the above condition is preferably in the range from 0.2 to 0.6. When the leveling value falls below 0.2, the surface unevenness of the recording layer 3 becomes large to make the value of the push-pull (NPPb) signal too large. Conversely, when the leveling value exceeds 0.6, the optical contrast between land and groove becomes difficult to obtain. Accordingly, the value of the push-pull (NPPb) signal becomes too small to perform tracking follow-up.
As in the case of the measurement of the recording layer film thickness, the leveling can be measured by peeling the recording layer 3 and layers formed above the recording layer 3 apart at the boundary between the intermediate layer 7 and recording layer 3, and also similarly, an atomic force microscope (AFM) can be used in the measurement. The above measurement method is merely exemplary, and any other suitable methods are applicable.
In this case, a measurement error of ±5% is probably involved in consideration of variations due to film peeling. Further, each measurement value may be the maximum value at its measurement point.

A relationship between optical parameters including the optical phase difference ΔS and change amount Δk of the extinction coefficient k of the recording layer before and after the recording and push-pull (NPPb) signal is shown in FIG. 8, and relationship between the optical parameters including the optical phase difference ΔS and change amount Δk and modulation factor is shown in FIG. 9.
In the graph of FIG. 8, the horizontal axis denotes the value of $\Delta S \times \Delta k$, and vertical axis denotes the value of the push-pull (NPPb) signal. In the graph of FIG. 9, the horizontal axis denotes the value of $\Delta S \times \Delta k$, and vertical axis denotes the value of the modulation factor. As can be seen from FIGS. 8 and 9, the optical parameter defined by a product of the optical phase difference ΔS and change amount Δk of the extinction coefficient bears a linear relationship with the push-pull (NPPb) signal and modulation factor.

When a theoretical calculation of a write-once type disk was carried out using a combination of Fresnel diffraction formula and absorption, transmission, multiple-reflection formula of the multilayer and in consideration of the groove and land shapes, and a simulation of an ROM disk was carried out using the Fresnel diffraction formula and in consideration of the pit shape, the Peak to Peak amplitude difference of the push-pull signal of the write-once type disk was 1.8 times that of the ROM disk, and the value of the push-pull signal of the ROM disk was about 0.3 in the simulation. In this case, it is known in theory that the modulation factor of 50% or more is obtained in the ROM disk.

Based on this theory, the modulation factor in the write-once type disk needs to be in the range from 40 to 70 in the wavelength range from 360 to 450 nm. Thus, as can be seen from FIGS. 8 and 9, a product of the optical phase difference ΔS and change amount Δk of the extinction coefficient, i.e., $\Delta S \times \Delta k$ is preferably in the range from 0.02 to 0.11. The refractive index of the layer on the light-transmitting layer side and refractive index and extinction coefficient of the recording layer can be measured by an n, k measuring apparatus (ex. ETA-RT/UV manufactured by Steage ETA-Optik GmbH). Each of the above values can be measured, as in the case described above, at the inner or outer peripheral area of the recording layer 3 where no groove is formed after peeling the recording layer 3 and layers formed above the recording layer 3 apart at the boundary between the intermediate layer 7 and recording layer 3. Further, other conditions such as the film thickness or groove depth of the recording layer can be measured by using an atomic force microscope (AFM) . The above measurement method is merely exemplary, and any other suitable methods are applicable.
In this case, a measurement error of $\pm$5% is probably involved in consideration of variations due to film peeling. Further, measurement values such as the film thickness or groove depth of the recording layer may be the maximum value at its measurement point.

As shown in FIG. 7, the value of the leveling (1-Dsub/Dref) needs to be increased in order to reduce the NPPb. To this end, it is necessary to reduce the value of Dsub and to increase the film thickness of the recording layer. However, when the film thickness of the recording layer is increased, heat is excessively accumulated in the recording time to cause thermal interference which is beyond compensation at the recording time, degrading Jitter characteristic. Thus, the NPPb characteristic and Jitter characteristic have a trade-off reflation.
As described above, the optical information recording medium according to the present invention has the reflecting layer and recording layer on the substrate and therefore the reflecting layer also has a groove shape. The film thickness and groove width of the reflecting layer exerts great influence on the NPPb characteristic and Jitter characteristic.

A relationship between the film thickness of the reflecting layer and Jitter characteristic is shown in FIG. 10.
In the graph of FIG. 10, the horizontal axis denotes the value of the film thickness (nm) of the reflecting layer, and vertical axis denotes the value of the Jitter (%).
As can be seen from FIG. 10, a satisfactory Jitter value is obtained when the film thickness of the reflecting layer is in the range from 120 to 180 nm. When the film thickness is reduced to less than 120 nm, the Jitter value is abruptly degraded.

A relationship between the groove width and push-pull (NPPb) is shown in FIG. 11. In this case, the groove depth is set to the same value as that of the substrate and is not changed, while the groove pitch is changed.
In the graph of FIG. 11, the horizontal axis denotes the value of the groove width (nm) of the reflecting layer, and vertical axis denotes the value of the push-pull (NPPb) signal.
As can be seen from FIG. 11, a satisfactory NPPb value is obtained when the groove width of the reflecting layer is in the range from 85 to 150 nm. When the groove width exceeds 150 nm, the NPPb value exceeds 0.7.

As can be understood from above, in the present invention, by setting the film thickness of the reflecting layer to a value as large as 120 to 180 nm and setting the groove width thereof to 85 to 150 nm, it is possible to promptly radiate the excessive heat which is caused at the recording time due to an increased thickness of the reflecting layer to thereby suppress the thermal interference while maintaining the NPPb characteristic.

Thus, by setting various conditions independently or by appropriately combining the plurality of conditions, a satisfactory push-pull signal and satisfactory modulation factor can be obtained in the optical information recording medium capable of recording information using a wavelength of 360 to 450 nm.

A recording method for optimally recording information onto the above-mentioned optical information recording medium using a recording apparatus will be described below.
When a laser beam of a short wavelength of 360 to 450 nm is used for the optical information recording medium having the configuration described above, the maximum film thickness of the recording layer at the track area in which pits are

arranged is preferably in the range from 25 to 60 nm, and maximum film thickness of the recording layer at the area adjacent to the track area is preferably in the range of 5 to 30 nm.

In this case, the value of the push-pull (NPPb) signal is varied depending on the spot diameter of the laser beam. Thus, with attention paid to the spot diameter, especially, in the radial direction, the radial spot diameter is preferable set in the range from 0.3 to 0.5 μm in order to suppress expansion of the pit at the recording time so as to prevent crosstalk. In this case, the recording power of the laser beam is preferably set in the range of 4.9 to 5.9 mW in order to obtain a satisfactory modulation factor that prevents the thermal interference in the recording layer. By irradiating the optical information recording medium with a laser beam under such conditions, the reflectance of the pit is higher than that of the non-pit area.

With the above configuration, in the information-recorded optical information recording medium, a satisfactory push-pull (NPPb) signal and satisfactory modulation factor can be obtained.

FIG. 12 is a graph showing the influence degree of the change amount Δn of the refractive index and change amount Δk of the extinction coefficient on the modulation factor (reflectance) in the optical information recording medium 10, wherein the film thickness of the recording layer 3 of the optical information recording medium 10 is variously changed.

As shown in FIG. 12, as far as the degree of contribution to the modulation factor is concerned, Δk is greater than Δn in contrast to that which can be obtained from the conventional organic dye. It can be estimated from these results that about 80% of the modulation factor is derived from the effects of Δk.

When calculated from the ratio of contribution to be obtained from FIG. 12, if it is desired to achieve a modulation factor of up to, e.g., 0.45, the Δn is required to be 0.052 (an increase of 94%), whereas Δk is required to be 0.009 (an increase of 22%). More specifically, Δn=0.335 or Δk=0.055 is required.

FIG. 13 is a graph showing a change of reflectance relative to the refractive index n. When it is desired to obtain a sufficient modulation factor (e.g., 0.45) by making use of only the refractive index n, it is required to realize a change of about 1.55 to 1.9 as the range of change in refractive index as shown by the dot-and-dash line shown in FIG. 13. As a matter of fact however, as shown in the graph of FIG. 11, a change of only 0.055 is permitted as Δn and hence the value of this change is confined to a very narrow region (as indicated in FIG. 13 by a double-dot-and-dash line) as shown in FIG. 13, thus making it impossible to obtain a sufficient change in reflectance.

FIG. 14 is a graph showing a change of reflectance relative to the extinction coefficient k. When it is desired to obtain a sufficient modulation factor (e.g., 0.45) by making use of only the extinction coefficient k, it is required to realize a change of about 0.15 to 0.2 as the range of change in extinction coefficient k as shown by the dot-and-dash line shown in FIG. 14. As a matter of fact however, as shown in the graph of FIG. 11, a change on 0.040 was permitted as Δk and hence this change indicates a value of a very wide region (as indicated in FIG. 14 by a double-dot-and-dash line) as shown in FIG. 14 in contrast to the case of refractive index n, thus making it possible to obtain a sufficient change in reflectance by making use of only Δk.

In FIG. 14, the range of value required (as the range of Δk) for the recording by making use of only Δk (shown by the dot-and-dash line shown in FIG. 14) is shifted to a smaller value than the actual range of change (shown by the double-dot-and-dash line in FIG. 14). The reason for this is that, as a tendency of the change of reflectance relative to Δk, the rising gradient of reflectance tends to become higher as Δk becomes smaller, so that the range of value required for the recording by making use of only Δk is shown therein as a preferable range. In practical use, the range of Δk may be set to any optional zone.

**(Example 1)**

A disk-like polycarbonate substrate (120 mm in outer diameter, and 1.1 mm in thickness) having a groove with a pitch of 0.32 μm was produced. A reflecting layer made of Ag alloy was sputtered on the substrate to form a track having a depth of 45 nm and a width of 110 nm. Thereafter, by means of spin-coating method, a dye solution obtained by dissolving the azo dye represented by chemical formula 1 in TFP (tetrafluoropropanol) solvent was coated on the surface of the substrate. The resultant surface was dried for 30 minutes at a temperature of 80°C to obtain a recording layer having a groove film thickness of 35 nm and a land film thickness of 15 nm. A transparent intermediate layer made of an aluminum nitride material was then sputtered to a thickness of 30 nm. Thereafter, a light-transmitting layer made of a 0.1 mm thickness polycarbonate sheet was bonded to the surface of the intermediate layer through a transparent adhesive, whereby an optical information recording medium was obtained.

When the refractive index n and extinction coefficient k of the recording layer in the optical information recording medium thus obtained were measured using an n,k measuring apparatus (ETA-RT/UV manufactured by Steage ETA-Optik GmbH), n was 1.42 and k was 0.39. The optical phase difference ΔS was 0.37. When a differential thermal analyzer (TG-DTA) was used to measure the extinction coefficient of the recording layer after heating, k was 0.2, so that the change amount Δk of the extinction coefficient k was 0.16.

Recording was carried out on the optical recording medium thus obtained using a commercially available recording/ palyback apparatus (DDU-1000, manufactured by Pulstec Industrial Co. Ltd.) with a wavelength of 405 nm,

a numerical aperture NA of 0.85, a recording power of 5.3 mW, and a linear velocity of 4.92 m/s and palyback characteristic was evaluated. The obtained push-pull (NPPb) value was 0.45, and modulation factor was 55%. That is, satisfactory results were obtained.

**(Example 2)**

An optical information recording medium was obtained in the same manner as the example 1 except that a reflecting layer was sputtered on the substrate to form a track having a depth of 57 nm and a width of 110 nm and that a dye solution obtained by dissolving the azo dye represented by chemical formula 1 and cyanine dye represented by chemical formula 2 in TFP (tetrafluoropropanol) solvent was coated on the surface of the substrate by means of spin-coating method to obtain a recording layer having a maximum groove film thickness of 34 nm and land film thickness of 10 nm.
When the refractive index n and extinction coefficient k of the recording layer in the optical information recording medium thus obtained were measured using an n,k measuring apparatus (ETA-RT/UV manufactured by Steage ETA-Optik GmbH), n was 1.41 and k was 0.35. The optical phase difference ΔS was 0.49. When a differential thermal analyzer (TG-DTA) was used to measure the extinction coefficient of the recording layer after heating, k was 0.21, so that the change amount Δk of the extinction coefficient k was 0.14.
Recording was carried out on the optical recording medium thus obtained using a commercially available recording/ palyback apparatus (DDU-1000, manufactured by Pulstec Industrial Co. Ltd.) under the same conditions as the example 1 and palyback characteristic was evaluated. The obtained push-pull (NPPb) value was 0.51, and modulation factor was 58%, That is, satisfactory results were obtained.

**(Example 3)**

An optical information, recording medium was obtained in the same manner as the example 1 except that a reflecting layer was sputtered on the substrate to form a track having a depth of 35 nm and a width of 85 nm and that the same dye solution as in the example 1 was coated on the surface of the substrate by means of spin-coating method to obtain a recording layer having a maximum groove film thickness of 23 nm and land film thickness of 16 nm.
When the refractive index n and extinction coefficient k of the recording layer in the optical information recording medium thus obtained were measured using an n,k measuring apparatus (ETA-RT/UV manufactured by Steage ETA-Optik GmbH), n was 1.42 and k was 0.39. The optical phase difference ΔS was 0.34. When a differential thermal analyzer (TG-DTA) was used to measure the extinction coefficient of the recording layer after heating, k was 0.23, so that the change amount Δk of the extinction coefficient k was 0.16.
Recording was carried out on the optical recording medium thus obtained using a commercially available recording palyback apparatus (DDU-1000, manufactured by Pulstec Industrial Co. Ltd.) under the same conditions as the example 1 and palyback characteristic was evaluated. The obtained push-pull (NPPb) value was 0.40, and modulation factor was 47%. That is, satisfactory results were obtained.

**(Comparative Example 1)**

An optical information recording medium was obtained in the same manner as the example 1 except that a reflecting layer was sputtered on the substrate to form a track having a depth of 30 nm and a width of 85 nm and that the same dye solution as in the example 1 was coated on the surface of the substrate by means of spin-coating method to obtain a recording layer having a maximum groove film thickness of 45 nm and land film thickness of 30 nm.
When the refractive index n and extinction coefficient k of the recording layer in the optical information recording medium thus obtained were measured using an n,k measuring apparatus (ETA-RT/UV manufactured by Steage ETA-Optik GmbH , n was 1.42 and k was 0.39. The optical phase difference ΔS was 0.24. When a differential thermal analyzer (TG-DTA) was used to measure the extinction coefficient of the recording layer after heating, k was 0.23, so that the change amount Δk of the extinction coefficient k was 0.16.
Recording was carried out on the optical recording medium thus obtained using a commercially available recording/playback apparatus (DDU-1000, manufactured by Pulstec Industrial Co. Ltd.) under the same conditions as the example 1 and playback characteristic was evaluated. The obtained push-pull (NPPb) value was 0.26, and modulation factor was 38%. That is, both values were excessively low. That is, a satisfactory characteristic could not be obtained.

**(Comparative Example 2)**

An optical information recording medium was obtained in the same manner as the example except that a reflecting layer was sputtered on the substrate to form a track having a depth of 70 nm and a width of 153 nm and that

the same dye solution as in the example 1 was coated on the surface of the substrate by means of spin-coating method to obtain a recording layer having a maximum groove film thickness of 55 nm and a land film thickness of 39 nm.
When the refractive index n and extinction coefficient k of the recording layer in the optical information recording medium thus obtained were measured using an n, k measuring apparatus (ETA-RT/UV manufactured by Steage ETA-Optik GmbH), n was 1.42 and k was 0.39. The optical phase difference $\Delta S$ was 0.70. When a differential thermal analyzer (TG-DTA) was used to measure the extinction coefficient of the recording layer after heating, k was 0.23, so that the change amount $\Delta k$ of the extinction coefficient k was 0.16.

Recording was carried out on the optical recording medium thus obtained using a commercially available recording/ palyback apparatus (DDU-1000, manufactured by Pulstec Industrial Co., Ltd.) under the same conditions as the example 1 and palyback characteristic was evaluated. The obtained push-pull (NPPb) value was 0.76, and modulation factor was 75%. That is, both values were excessively large. That is, a satisfactory characteristic could not be obtained.

**(Evaluation condition 1)**

A disk-like polycarbonate substrate (120 mm in outer diameter, and 1.1 mm in thickness) having a groove with a pitch of 0.32 μm was produced. A reflecting layer made of Ag alloy was sputtered on the substrate to form a track having a size as shown in the following examples and comparative examples. Thereafter, dye i) : a dye solution obtained by dissolving the azo dye represented by chemical formula 1 in TFP (tetrafluoropropanol) solvent was coated on the surface of the substrate by means of spin-coating method, followed by drying for 30 minutes at a temperature of 80°C, whereby a recording layer having a groove film thickness and land film thickness as shown in the following examples and comparative examples was obtained; dye ii): a dye solution obtained by dissolving the azo dye represented by chemical formula 1 and cyanine dye represented by chemical formula 2 in TFP (tetrafluoropropanol) solvent was coated on the surface of the substrate by means of spin-coating method, followed by drying for 30 minutes at a temperature of 80°C, whereby a recording layer having a groove film thickness and land film thickness as shown in the following examples and comparative examples was obtained. In each of the cases i) and ii), a transparent intermediate layer made of an aluminum nitride material was sputtered to a thickness of 20 nm. Thereafter, a light-transmitting layer made of a 0.1 mm thickness polycarbonate sheet was bonded to the surface of the intermediate layer through a transparent adhesive, whereby an optical information recording medium was obtained.
Recording was carried out on the optical recording medium thus obtained using a commercially available recording/ palyback apparatus (DDU-1000, manufactured by Pulstec Industrial Co. , Ltd.) with a wavelength of 405 nm, a numerical aperture of 0.85, a recording power of 5.3 mW, and a linear velocity of 4.92 m/s and playback characteristic was evaluated.

**(Example 4)**

A track having a depth of 46 nm and a width of 109 nm was formed, and dye i was used to form a recording layer having a groove film thickness of 27 nm and land film thickness of 10 nm. 1-Dsub/Dref was 0.37, and push-pull value (NPPb) obtained in the playback evaluation was 0.59, which was a satisfactory result.

**(Example 5)**

A track having a depth of 62 nm and a width of 136 nm was formed, and dye ii was used to form a recording layer having a groove film thickness of 44 nm and land film thickness of 12 nm. 1-Dsub/Dref was 0.52, and push-pull value (NPPb) obtained in the palyback evaluation was 0.49, which was a satisfactory result.

**(Example 6)**

A track having a depth of 35 nm and a width of 86 nm was formed, and dye i was used to form a recording layer having a groove film thickness of 27 nm and land film thickness of 6 nm. 1-Dsub/Dref was 0.60, and push-pull value (NPPb) obtained in the palyback evaluation was 0.40, which was a satisfactory result.

**(Comparative Example 3)**

A track having a depth of 57 nm and a width of 153 nm was formed, and dye i was used to form a recording layer having a groove film thickness of 23 nm and land film thickness of 14 nm. 1-Dsub/Dref was 0.16, and push-pull value (NPPb) obtained in the palyback evaluation was 0.74, which was excessively large.

**(Comparative Example 4)**

A track having a depth of 35 nm and a width of 86 nm was formed, and dye i was used to form a recording layer having a groove film thickness of 27 nm and land film thickness of 4 nm. 1-Dsub/Dref was 0.66, and push-pull value (NPPb) obtained in the palyback evaluation was 0.35, which was excessively small.

**(Evaluation conditions 2)**

A disk-like polycarbonate substrate (120 mm in outer diameter, and 1.1 mm in thickness) having a groove with a pitch of 0. 32 μm was produced. A reflecting layer made of Ag alloy was sputtered on the substrate to form a track. Thereafter, dye i): a dye solution obtained by dissolving the azo dye represented by chemical formula 1 in TFP (tetrafluoropropanol) solvent was coated on the surface of the substrate by means of spin-coating method, followed by drying for 30 minutes at a temperature of 80 °C, whereby a recording layer was obtained; dye ii): a dye solution obtained by dissolving the azo dye represented by chemical formula 1 and cyanine dye represented by chemical formula 2 in TOP (tetrafluoropropanol) solvent was coated on the surface of the substrate by means of spin-coating method, followed by drying for 30 minutes at a temperature of 80°C, whereby a recording layer was obtained. In each of the cases i) and ii), a transparent intermediate layer made of an aluminum nitride material was sputtered to a thickness of 20 nm. Thereafter, a light-transmitting layer made of a 0.1 mm thickness polycarbonate sheet was bonded to the surface of the intermediate layer through a transparent adhesive, whereby an optical information recording medium was obtained.

When the refractive index n and extinction coefficient k of the recording layer formed by using the dye i were measured using an n,k measuring apparatus (ETA-RT/UV manufactured by Steage ETA-Optik GmbH), n was 1.42 and k was 0.39. When a differential thermal analyzer (TG-DTA) was used to measure the extinction coefficient of the recording layer after heating, k was 0.23, so that the change amount $\Delta k$ of the extinction coefficient k was 0.16. Similarly, in the case of dye ii, n was 1.41 and k was 0.35. The extinction coefficient k of the recording layer after heating was 0.21, so that the change amount $\Delta k$ of the extinction coefficient k was 0.14.

Recording was carried out on the optical recording medium using a commercially available recording/ palyback apparatus (DDU-1000, manufactured by Pulstec Industrial Co., Ltd.) with a wavelength of 445 nm, a numerical aperture of 0.85, a recording power of 5.3 mW, and a linear velocity of 4.92 m/s and playback characteristic was evaluated.

**(Example 7)**

The dye i was used to form an optical information recording medium such that $\Delta S$ becomes 0.5 according to the above-mentioned formula concerning the optical phase difference $\Delta S$. In this case, $\Delta S \times \Delta k$ was 0.08, push-pull value (NPPb) was 0.04, and modulation factor was 52%. That is, satisfactory results were obtained.

**(Example 8)**

The dye ii was used to form an optical information recording medium such that $\Delta S$ becomes 0.7 according to the above-mentioned formula concerning the optical phase difference $\Delta S$. In this case, $\Delta S \times \Delta k$ was 0.1, push-pull value (NPPb) was 0.53, and modulation factor was 64%. That is, satisfactory results were obtained.

**(Comparative Example 5)**

The dye i was used to form an optical information recording medium such that $\Delta S$ becomes 1.0 according to the above-mentioned formula concerning the optical phase difference $\Delta S$. In this case, $\Delta S \times \Delta k$ was 0.16, push-pull value (NPPb) was 0.75, and modulation factor was 76%. That is, the push-pull value was excessively large.

**(Examples 9 to 11 and Comparative Examples 6 and 7)**

A disk-like polycarbonate substrate (120 mm in outer diameter, and 1.1 mm in thickness) having a groove with a pitch of 0.32 μm was produced. A reflecting layer made of Ag alloy was sputtered on the substrate to a thickness of 60 to 180 nm to form a track. Thereafter, by means of spin-coating method, a dye solution obtained by dissolving the azo dye represented by chemical formula 1 in TFP (tetrafluoropropanol) solvent was coated on the surface of the substrate. The resultant surface was dried for 30 minutes at a temperature of 80 °C to obtain a recording layer having a groove film thickness of 35 nm and a land film thickness of 15 nm.

A transparent intermediate layer made of an aluminum nitride material was then sputtered to a thickness of 20 nm. Thereafter, a light-transmitting layer made of a 0.1 mm thickness polycarbonate sheet was bonded to the surface of the intermediate layer through a transparent adhesive, whereby an optical information recording medium was obtained.

Recording was carried out on the optical recording medium thus obtained using a commercially available recording/ palyback apparatus (ODU-1000, manufactured by Pulstec Industrial Co., Ltd.) with a wavelength of 405 nm, a numerical aperture of 0.85, and a linear velocity of 4.92 m/s and recording/ palyback characteristic was evaluated. The groove depth and groove width after formation of the substrate and reflecting layer were measured using the ARM. The groove depth of the substrate was controlled to be in the range from 35 to 623 nm, and a change in the depth after formation of the reflecting layer was ± 3 nm, which was within the margin of error.

The groove width of the substrate, film thickness of the reflection layer, groove depth and groove width of the reflecting layer, NPPb, and Jitter obtained in Examples 4 to 6 and Comparative examples 3 and 4 are shown in the following table.

[Table 1]

| | Ex. 9 | Ex.10 | Ex. 11 | Comp. Ex. 6 | Comp. Ex. 7 |
|---|---|---|---|---|---|
| Groove width of substrate (nm) | 156 | 178 | 156 | 156 | 195 |
| Film thickness of reflecting layer (nm) | 150 | 150 | 180 | 60 | 150 |
| Groove depth of reflecting layer (nm) | 57 | 57 | 57 | 57 | 57 |
| Groove width of rejecting layer (nm) | 105 | 136 | 85 | 141 | 153 |
| NPPb | 0.50 | 0.62 | 0.40 | 0.64 | 0.75 |
| Jitter (%) | 5.80 | 5.48 | 6.00 | 12.68 | 5.55 |

The NPPb value is obtained as follow: a push-pull signal is divided, in the rotation follow-up direction of a tetrameric detector (A, B, C, D) into two groups (A+B, C+D); and a difference between the A+B and C+D is divided by the amount of reflecting light. The NPPb value can be calculated by the commercially available recording/ palyback apparatus as described above.

The Jitter value is obtained as follows: an RF signal is digitized; and the shift amount between the obtained digital signal and a reference clock is calculated. The Jitter value can also be calculated by the commercially available recording/ palyback apparatus as described above.

Thus, by setting the upper limit of the push-pull (NPPb) characteristic to 0.7 in the wavelength range from 360 to 450 nm while maintaining the modulation factor a constant, a satisfactory recording/ palyback characteristic can be obtained. When the push-pull (NPPb) signal exceeds 0.7, it becomes difficult for a photodetector to distinguish between light and dark, making it impossible to perform focusing follow-up.

When the Jitter characteristic is 8% or less while the push-pull characteristic is satisfied, a satisfactory recording/palyback characteristic can be obtained. When the Jitter characteristic exceeds 8%, data on the optical information recording medium becomes difficult to read, which may disable the drive side data readout operation.

In the examples 4 to 6, both the NPPb and Jitter values were satisfactory. On the other hand, in the Comparative Example 3, the NPPb value was satisfactory while large thermal interference took place to thereby excessively increase the Jitter value (12.6%). In the Comparative Example 4, the Jitter value was satisfactory while the NPPb value was excessively large (0.75).

Although the recording layer is a single layer in the above embodiment, the present invention can be applied to a multilayer recording type optical information recording medium comprising a plurality of recording layers.

Further, in the above-mentioned embodiment, the recording layer is made of a coloring material. Alternatively, however, in the case where the reflecting layer induces optical interference influencing the recording operation, the recording layer may be a plurality of layers including the reflecting layer. The same applies to the case where a light interference layer or an enhance layer for adjusting optical characteristics is provided adjacent to the recording layer. The point is that the recording layer may be a single layer or a plurality of layers as long as the layer playing a role in recording operation.

As described above, the optical information recording medium according to the present invention can reduce a push-pull value, which serves to achieve high-density and high-speed recording. Thus, it becomes possible to provide a Low to High type optical information medium using a shorter wavelength, e.g., a recording wavelength of 360 to 450 nm, and a recording method capable of obtaining a satisfactory push-pull signal and a satisfactory modulation factor for a laser beam of a short wavelength (e.g., 360 to 450 nm).

## Claims

**1.** An optical information recording medium comprising:

a substrate on which a groove and land are formed, and a deflecting layer and recording layer formed on the substrate, wherein an
optically-readable pit has been recorded in the recording layer or can be recorded through an irradiation of the laser beam onto the recording layer, **characterized in that**
the reflectance of the pit is higher than that of a non-pit area,
the maximum film thickness of the recording layer at the track area where the pits are arranged is in the range from 25 to 60 nm, and
the maximum film thickness of the recording layer at the area adjacent to the track area is in the range of 5 to 30 nm.

**2.** The optical information recording medium according to claim 1, wherein the ratio between the maximum film thickness of the recording layer at its track area where the pits are arranged and the maximum film thickness of the recording layer at the area adjacent to the track area is in the range of 0.1 to 0.6.

**3.** The optical information recording medium according to claim 1, wherein the maximum depth of the track is in the range of 35 to 65 nm.

**4.** The optical information recording medium according to claim 1, wherein the track is formed to have a pitch of 290 to 350 nm and a width of 85 to 150 nm.

**5.** An optical information recording medium comprising:

a substrate on which a groove and land are formed; and a reflecting layer and recording layer formed on the substrate, wherein, an optically-readable pit has been recorded in the recording layer or can be recorded through an irradiation of the laser beam onto the recording layer, **characterized in that**
the recording layer contains an organic dye, and
the reflectance of the groove portion is lower than that of the land portion.

**6.** The optical information recording medium according to claim 5, wherein the extinction coefficient of the organic dye is in the range from 0.1 to 0.6 in the reproduction wave of the laser beam.

**7.** The optical information recording medium according to claim 5, wherein the refractive index of the organic dye is in the range from 1.1 to 1.7 in the reproduction wave of the laser beam.

**8.** The optical information recording medium according to claim 5, wherein the recording wavelength of the laser beam is shifted to the short wavelength side relative to the absorption peak of the absorption spectrum of the recording layer.

**9.** An optical information recording medium comprising:

a substrate on which a groove and land are formed; and a reflecting layer and recording layer formed on the substrate, wherein an optically-readable pit has been recorded in the recording layer or can be recorded through an irradiation of the laser beam onto the recording layer, **characterized in that**
1-Dsub/Dref is in the range from 0.2 to 0.6, where Dsub is the maximum depth of the recording layer at the groove portion, and Dref is the maximum depth of the reflecting layer at the groove portion, and
the reflectance of the groove portion is lower than that of the land portion.

**10.** The optical information recording medium according to claim 9, wherein a light-transmitting layer is formed on the recording layer, with a laser beam being irradiated on the surface of the optical information recording medium from the light-transmitting layer side.

**11.** The optical information recording medium according to claim 5 or 9, wherein the recording layer absorbs a laser beam having a wavelength of 360 to 450 nm.

**12.** The optical information recording medium according to claim 5 or 9, wherein the recording layer absorbs a laser beam having a wavelength of 405 nm.

**13.** An optical information recording medium comprising:

a substrate on which a groove and land are formed; a reflecting layer and recording layer formed on the substrate;

and a light-transmitting layer formed on the recording layer, wherein an optically-readable pit has been recorded in the recording layer or can be recorded through an irradiation of the laser beam onto the recording layer from the light-transmitting layer side,
**characterized in that**
when $\Delta S = 2nabs \{Dg - Dl + (nsub \times Dsub) / nabs\} / \lambda$ (where Dsub is the maximum depth of the groove portion in a layer on the light transmitting side relative to the recording layer; Dg is the maximum thickness of the recording layer at the groove portion,; D1 is the maximum thickness of the recording layer at the land portion; nsub is the real part of the complex refractive index of a layer located on the light-transmitting layer side relative to the recording layer; nabs is the real part of the complex refractive index of the recording layer; and $\lambda$ is the wavelength of a reproduction light) and change amount $\Delta k$ = Kabsb-kabsa (kabsb is the imaginary part of the complex refractive index of the recording layer before recording; and kabsa is the imaginary part of the complex refractive index of the recording layer after recording) are satisfied, $0.02 \leq \Delta S \times \Delta k \leq 0.11$ is satisfied.

**14.** The optical information recording medium according to claim 13, wherein an intermediate layer is interposed between the recording layer and light-transmitting layer.

**15.** An optical information recording medium comprising:

a substrate on which a groove and land are formed; and a reflecting layer and recording layer formed on the substrate, wherein an optically-readable pit has been recorded in the recording layer or can be recorded through an irradiation of the laser beam onto the recording layer, **characterized in that**
the film thickness of the reflecting layer is set in the range from 120 to 180 nm, and
the groove width of the reflecting layer is set in the range from 85 to 150 nm.

**16.** A manufacturing method of an optical information recording medium onto which an optically-readable pit is recorded through an irradiation of a laser beam having a wavelength of 360 to 450 nm, **characterized by** comprising the steps of:

forming a reflecting layer on a substrate;
forming, on the reflecting layer, a recording layer such that the maximum film thickness thereof at the track area where the pits are arranged is in the range from 25 to 60 nm, and maximum film thickness thereof at the area adjacent to the track area is in the range of 5 to 30 nm; and
forming, on the recording layer, a light-transmitting layer having a thickness of about 0.1 mm.

**17.** The manufacturing method of an optical information recording medium according to claim 16, wherein a step of forming an intermediate layer on the recording layer is provided after the step of forming the recording layer.

**18.** A recording method of an optical information recording medium onto which an optically-readable pit is recorded through an irradiation of a laser beam having a wavelength of 360 to 450 nm, **characterized in that**
an optical information recording medium having a recording layer whose maximum film thickness at the track area where the pits are arranged is in the range from 25 to 60 nm and maximum film thickness at the area adjacent to the track area is in the range of 5 to 30 nm is irradiated with a laser beam having a spot diameter in the radial direction of 0.3 to 0.5 $\mu$m and a recording power of 4.9 to 5.9 mW to form the pit such that the reflectance of the pit is higher than that of non-pit area.

**19.** The recording method of an optical information recording medium according to claim 18, wherein the recording wavelength of the laser light is shifted to the short wavelength side relative to the absorption peak of the absorption spectrum of the recording layer.

Fig. 1

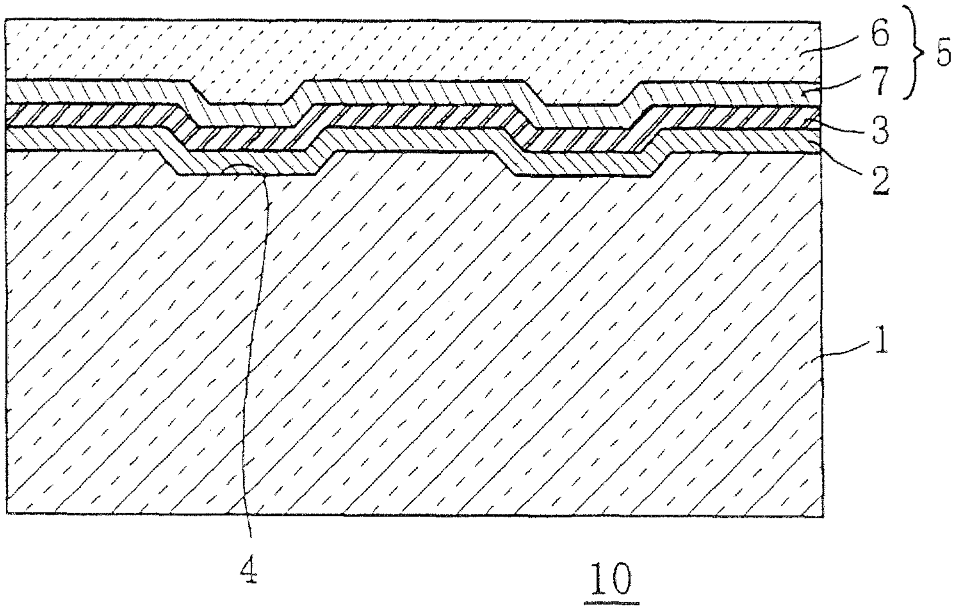


Fig. 2

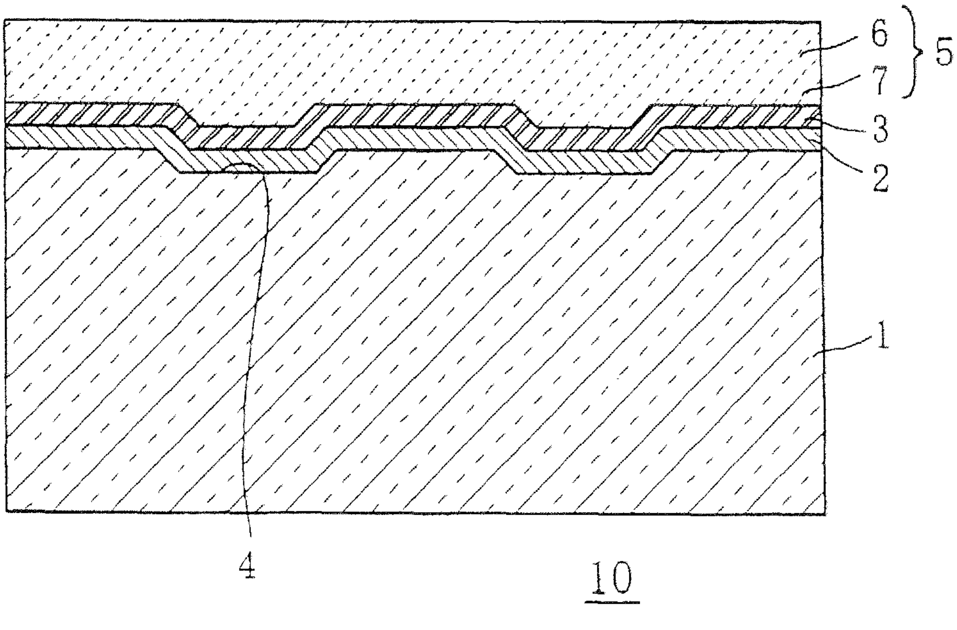

Fig. 3

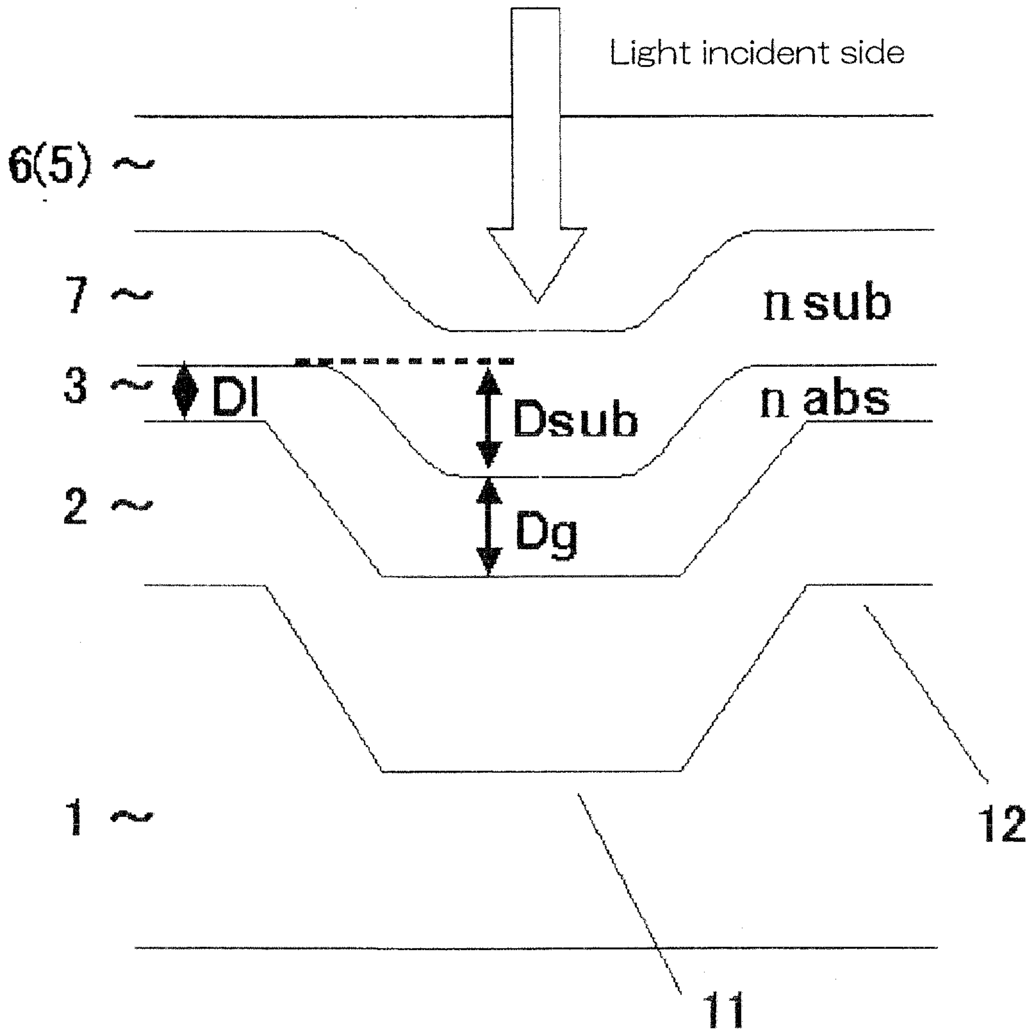

Fig. 4

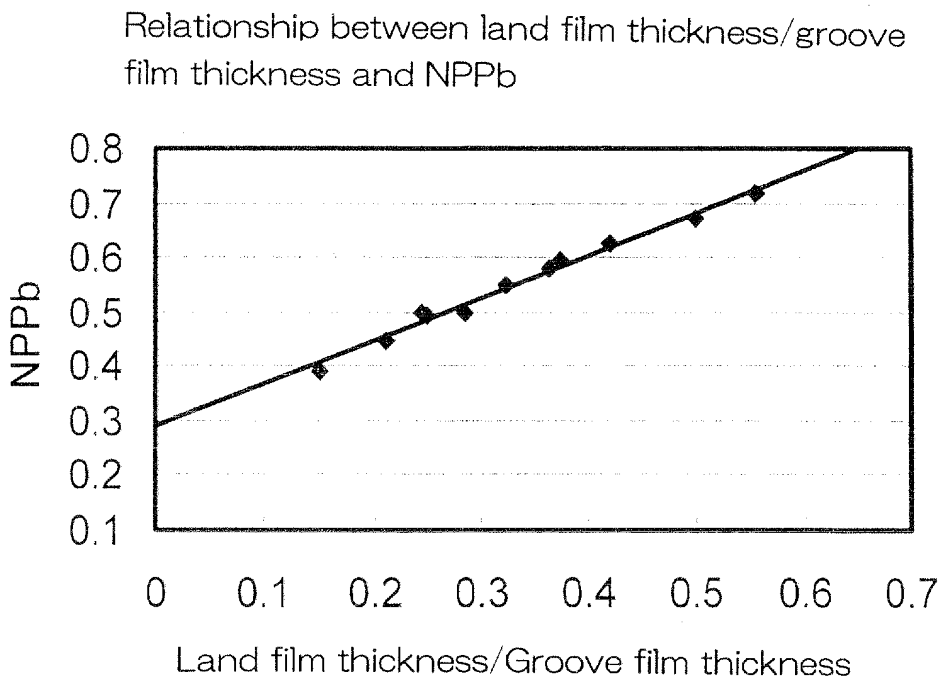
Relationship between land film thickness/groove film thickness and NPPb
NPPb
0.8
0.7
0.6
0.5
0.4
0.3
0.2
0.1
0
0.1
0.2
0.3
0.4
0.5
0.6
0.7
Land film thickness/Groove film thickness

Fig. 5

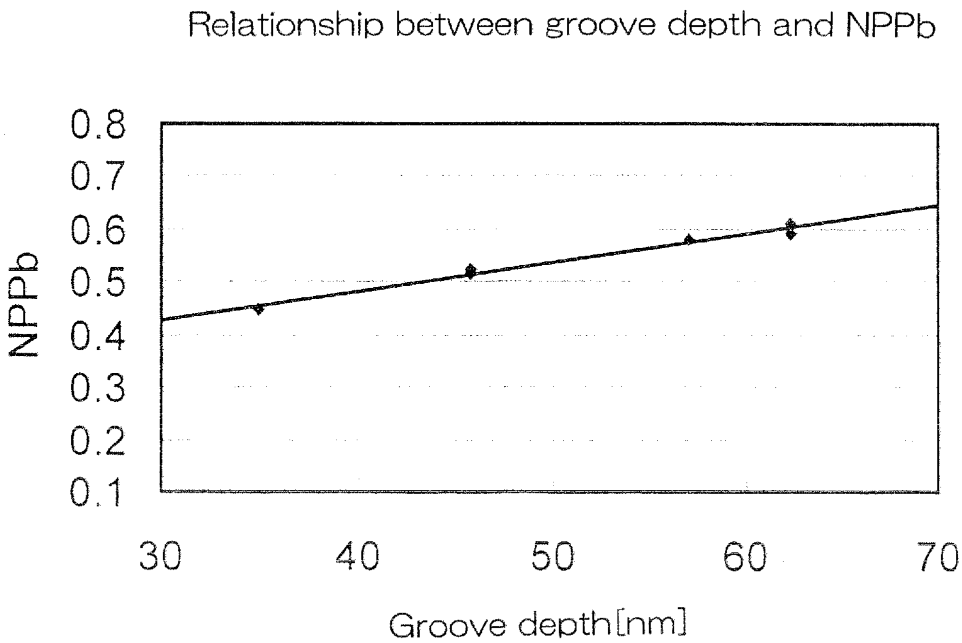
Relationship between groove depth and NPPb
NPPb
0.8
0.7
0.6
0.5
0.4
0.3
0.2
0.1
30
40
50
60
70
Groove depth[nm]

F i g. 6

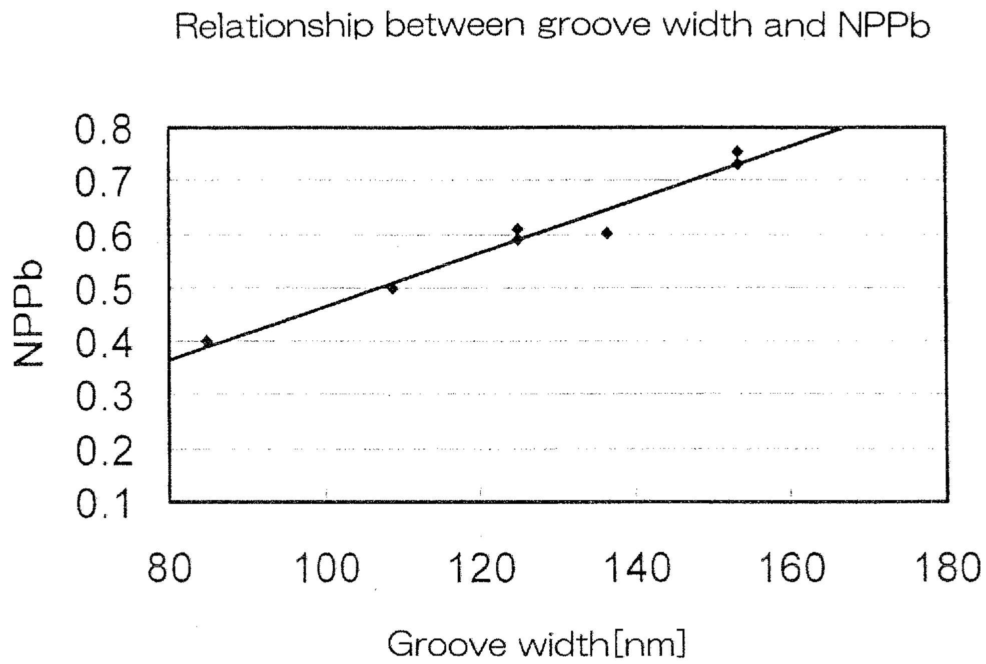
Relationship between groove width and NPPb
NPPb
0.8
0.7
0.6
0.5
0.4
0.3
0.2
0.1
80
100
120
140
160
180
Groove width[nm]

F i g. 7

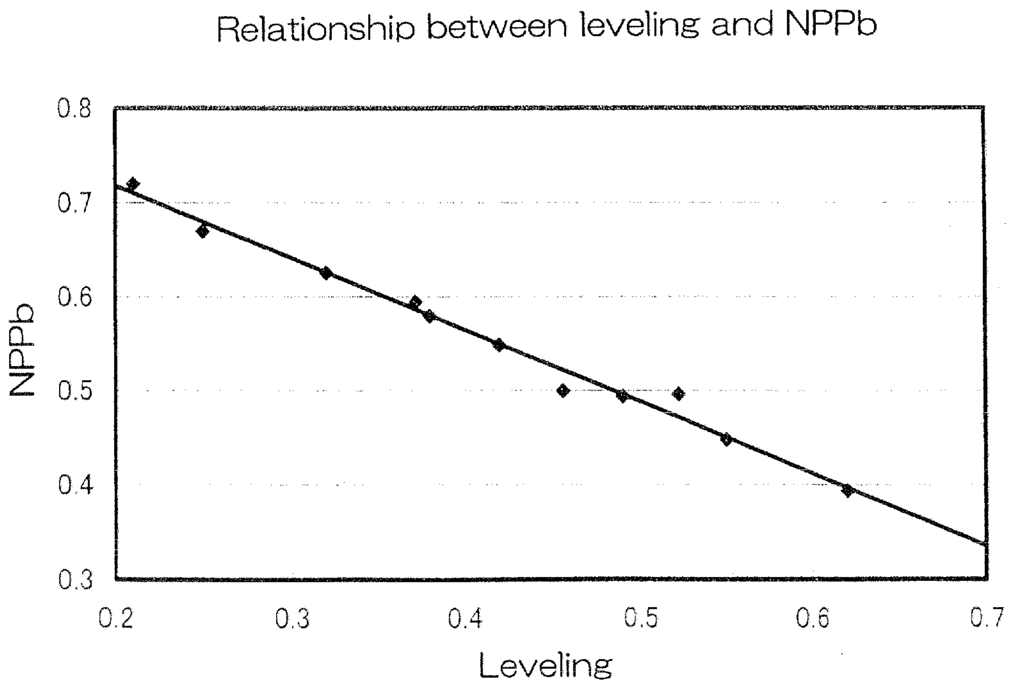
Relationship between leveling and NPPb
NPPb
0.8
0.7
0.6
0.5
0.4
0.3
0.2
0.3
0.4
0.5
0.6
0.7
Leveling

Fig. 8

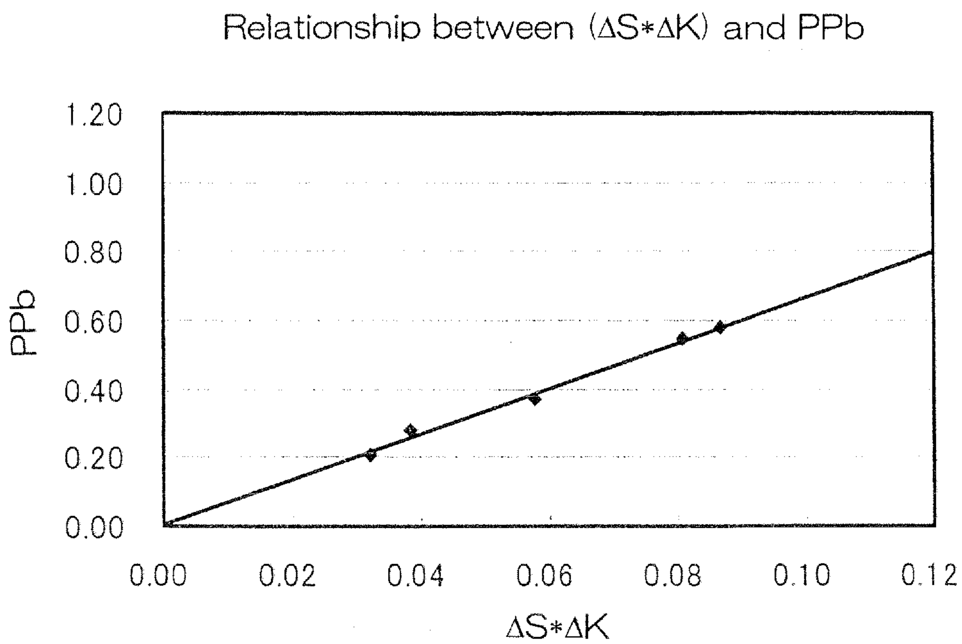
Relationship between (ΔS*ΔK) and PPb
PPb
1.20
1.00
0.80
0.60
0.40
0.20
0.00
0.00
0.02
0.04
0.06
0.08
0.10
0.12
ΔS*ΔK

Fig. 9

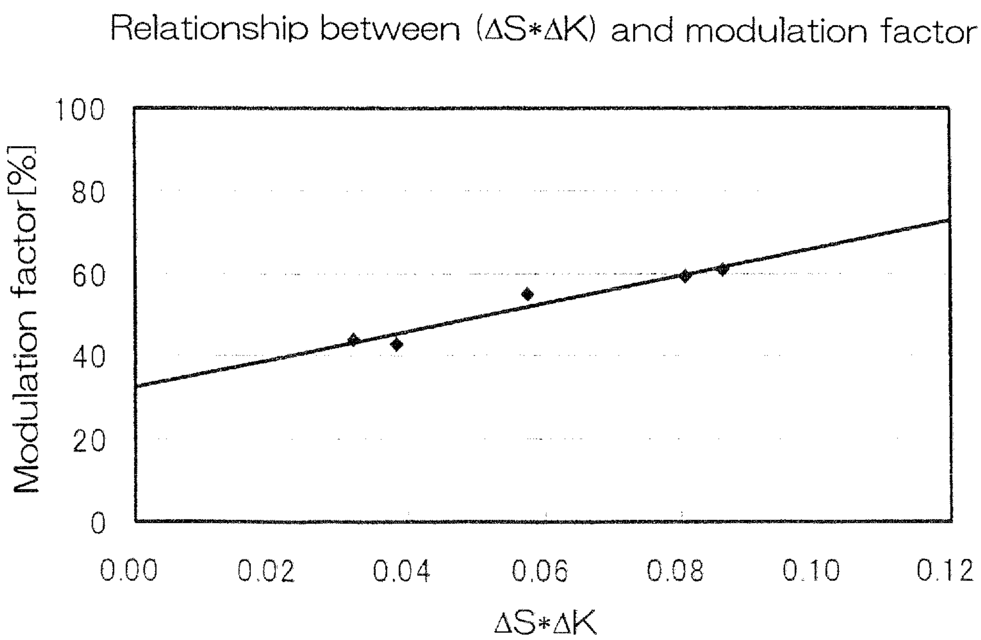
Relationship between (ΔS*ΔK) and modulation factor
Modulation factor[%]
100
80
60
40
20
0
0.00
0.02
0.04
0.06
0.08
0.10
0.12
ΔS*ΔK

Fig. 10

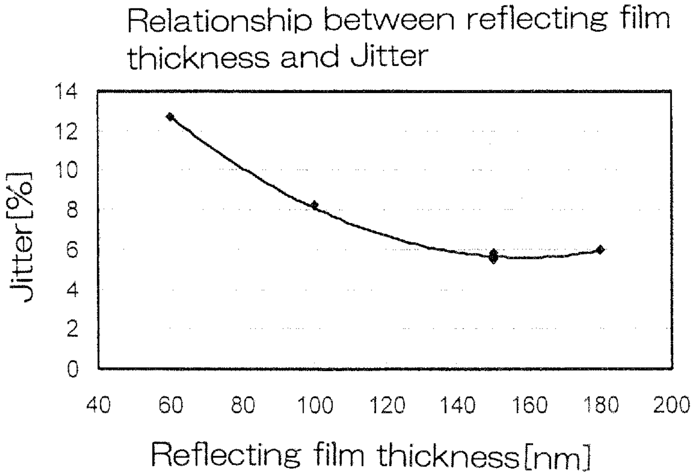


Fig. 11

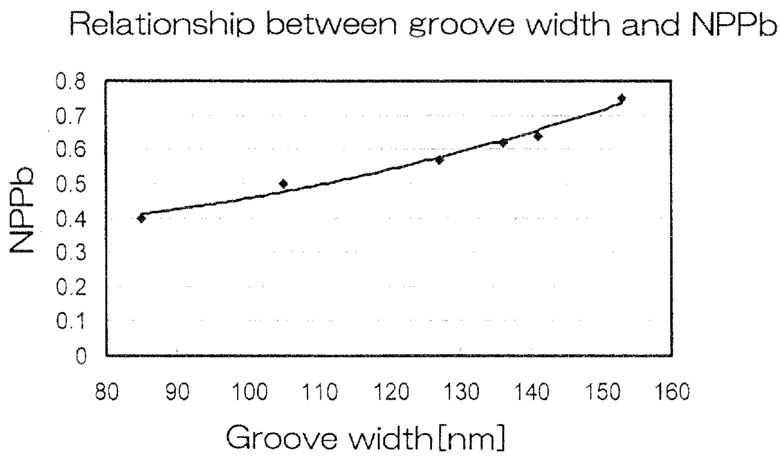


Fig. 12

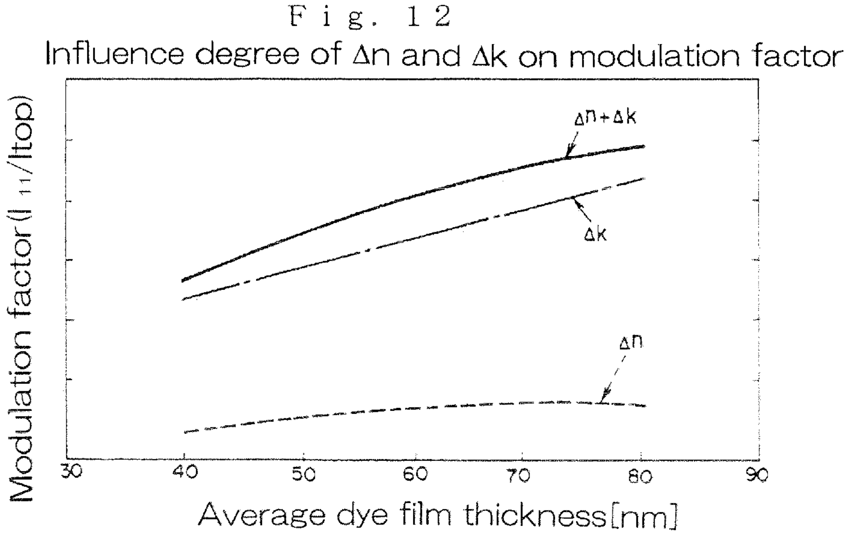

Fig. 13

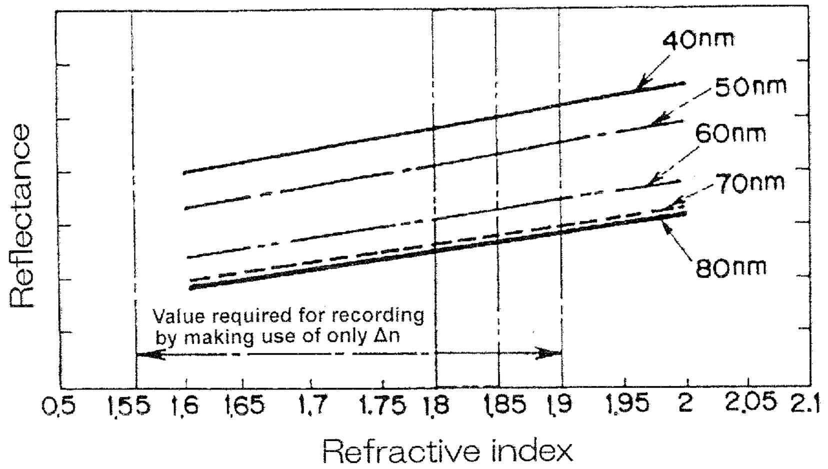


Fig. 14

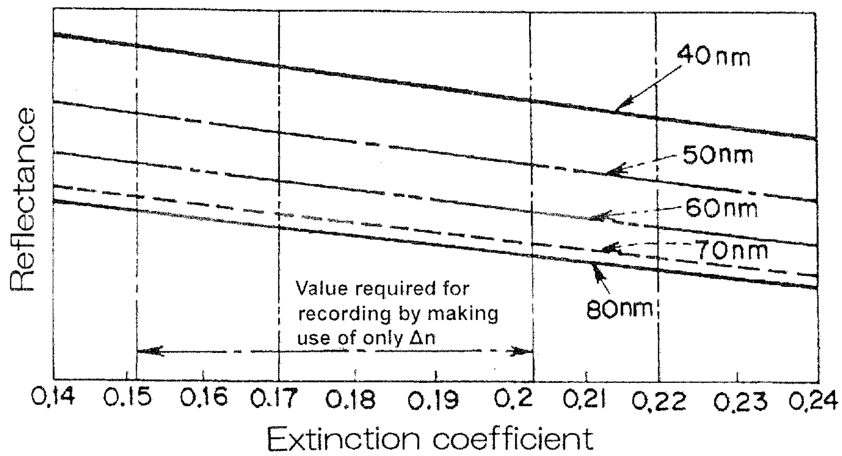


Fig. 15

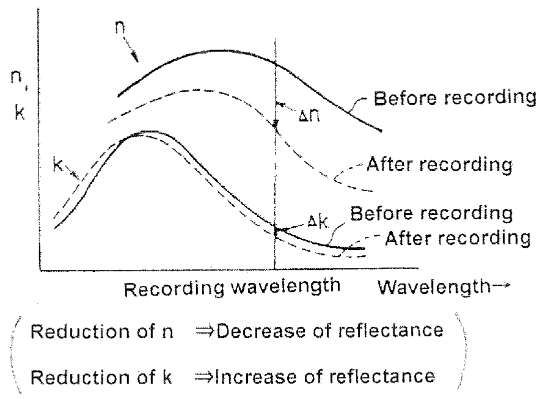

## INTERNATIONAL SEARCH REPORT

International application No.
PCT/JP2007/052294

A. CLASSIFICATION OF SUBJECT MATTER
*G11B7/24*(2006.01)i, *G11B7/244*(2006.01)i

According to International Patent Classification (IPC) or to both national classification and IPC

B. FIELDS SEARCHED

Minimum documentation searched (classification system followed by classification symbols)
G11B7/24, G11B7/244

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | WO 2006/043526 A1 (Fuji Photo Film Co., Ltd.), 27 April, 2006 (27.04.06), Claims 1 to 14; Par. Nos. [0001] to [0074]; Fig. 1 (Family: none) | 1-5,16-19 |
| A | JP 2003-263779 A (Fuji Photo Film Co., Ltd.), 19 September, 2003 (19.09.03), Full text; all drawings (Family: none) | 1-19 |
| A | JP 2004-90372 A (Mitsui Chemicals, Inc.), 25 March, 2004 (25.03.04), Full text; all drawings (Family: none) | 1-19 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>08 May, 2007 (08.05.07) | Date of mailing of the international search report<br>22 May, 2007 (22.05.07) |
| Name and mailing address of the ISA/<br>Japanese Patent Office<br><br>Facsimile No. | Authorized officer<br><br>Telephone No. |

Form PCT/ISA/210 (second sheet) (April 2005)

**INTERNATIONAL SEARCH REPORT**

International application No.
PCT/JP2007/052294

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The invention of claim 1 relates to "an optical information recording medium in which the pit reflectance is higher than the reflectance of the non-pit region, the maximum film thickness of the recording layer in the track region where the pits are arranged is in the range from 25 to 60 nm, and the maximum film thickness of the recording layer in the region adjacent to the track is in the range from 5 to 30 nm."

The inventions of claims 5-8, 11-12 relate to "an optical information recording medium in which the recording layer contains an organic pigment, and the reflectance of the groove portion is lower than the reflectance of the land portion." (Continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, the payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

INTERNATIONAL SEARCH REPORT

International application No.
PCT/JP2007/052294

Continuation of Box No.III of continuation of first sheet(2)

The inventions of claims 9-10 relate to "an optical information recording medium in which 1 - Dsub/Dref is in the range from 0.2 to 0.6 and the reflectance of the groove portion is lower than the reflectance of the land portion."

The inventions of claims 13-14 relates to "an optical information recording medium satisfying: $\Delta S = 2\,nabs\{D1 - Dg + (nsub \times Dsub)/nabs\}\}/\lambda$, $0.02 \leq \Delta S \times \Delta k \leq 0.11$."

The invention of claim 15 relates to "an optical recording medium in which the reflectance layer has a film thickness in the range from 120 to 180 nm and the a groove width in the range from 85 to 150 nm."

There is no technical relationship among those inventions involving one or more of the same or corresponding special technical features. Accordingly, the inventions are not so linked as to form a single general inventive concept.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11120594 A
- JP 2003030442 A